# EUROPEAN PATENT APPLICATION

(11) **EP 4 589 458 A1**
(43) Date of publication of application: **23.07.2025**
(21) Application number: 23887456.4
(22) Date of filing: 19.06.2023
(51) Int. Cl.: G06F 21/57

(54) **SECURITY VERIFICATION METHOD, DATA PROCESSING SYSTEM, STORAGE MEDIUM AND PROGRAM PRODUCT**

(30) Priority: 07.11.2022 CN 202211386390
(71) Applicant: Huawei Technologies Co., Ltd., Shenzhen, Guangdong 518129 (CN)
(72) Inventor: PENG, Kun, Shenzhen, Guangdong 518129 (CN)
(74) Representative: Goddar, Heinz J.
(86) International application number: PCT/CN2023/101011
(87) International publication number: WO 2024/098759

(57) **Abstract**

This application relates to a security verification method, a data processing system, a storage medium, and a program product. The method is applied to the data processing system. The method includes: A data processing unit receives a security verification request initiated by user equipment for a trusted execution environment; and the data processing unit sends operating environment information including a full signature and a public key of the trusted execution environment to the user equipment in response to the security verification request. The operating environment information including the full signature and the public key of the trusted execution environment are used to verify security of the trusted execution environment. According to the method, security of a trusted execution environment including a plurality of objects in the data processing system can be verified based on a root key generated based on private keys of the plurality of objects, and a user does not need to completely trust any one of the plurality of objects, to improve reliability of the trusted execution environment.

## Description

This application claims priority to Chinese Patent Application No. 202211386390.1, filed with the China National Intellectual Property Administration on November 7, 2022 and entitled "SECURITY VERIFICATION METHOD, DATA PROCESSING SYSTEM, STORAGE MEDIUM, AND PROGRAM PRODUCT", which is incorporated herein by reference in its entirety.

### TECHNICAL FIELD

This application relates to the data processing field, and in particular, to a security verification method, a data processing system, a storage medium, and a program product.

### BACKGROUND

A core technology of secure computing and trusted computing is data isolation, in other words, protecting data of a user from being accessed by another entity (including a superuser, for example, an administrator). Data isolation may be implemented based on a trusted execution environment (trusted execution environment, TEE). The trusted execution environment TEE is an operating environment including independent trust zones obtained through division from a processor and a memory. Different trust zones may be used to isolate different applications (for example, trusted applications (trusted applications, TAs)), to prevent the applications from accessing data of each other. Even an application with a high permission level cannot perform cross-zone access.

With continuous development of secure computing and trusted computing, application fields of secure computing and trusted computing are also continuously expanded, higher computing power is required, and a more complex algorithm is also required. Consequently, it is difficult for a single processor to provide a trusted execution environment that meets a requirement of the user. In view of this, the conventional technology provides a method for jointly constructing a trusted execution environment in which a cloud platform serves as a controller of the trusted execution environment and a plurality of processors each serve as a computing power and algorithm provider. However, in this method, a root key of the trusted execution environment is generated by the cloud platform. Therefore, a user needs to trust the cloud platform. Once the cloud platform is faulty, security of the trusted execution environment cannot be ensured. Consequently, reliability of the trusted execution environment is low.

### SUMMARY

In view of this, a security verification method, a data processing system, a storage medium, and a program product are provided. According to the security verification method in embodiments of this application, the method can be applied to a data processing system. Security of a trusted execution environment including a plurality of objects in the data processing system can be verified based on a root key generated based on private keys of the plurality of objects, and a user does not need to completely trust any one of the plurality of objects, to improve reliability of the trusted execution environment.

According to a first aspect, an embodiment of this application provides a security verification method. The method is applied to a data processing system, the data processing system includes a data processing unit and a trusted execution environment, the trusted execution environment includes two or more objects to be used by user equipment, and the method includes: The data processing unit receives a security verification request initiated by the user equipment for the trusted execution environment; and the data processing unit sends operating environment information including a full signature and a public key of the trusted execution environment to the user equipment in response to the security verification request. The operating environment information including the full signature is obtained by signing operating environment information of the trusted execution environment based on a private key of each object in the trusted execution environment, and the public key of the trusted execution environment is obtained based on the private key of each object. The operating environment information including the full signature and the public key of the trusted execution environment are used to verify security of the trusted execution environment.

According to the security verification method in this embodiment of this application, the data processing unit receives the security verification request initiated by the user equipment for the trusted execution environment; and sends the operating environment information including the full signature and the public key of the trusted execution environment to the user equipment in response to the security verification request, so that the user equipment can obtain information used to verify the security of the trusted execution environment. The public key of the trusted execution environment is obtained based on the private key of each object. It is equivalent to that a plurality of objects in the trusted execution environment jointly generate, control, and use a root key of the trusted execution environment, and a user does not need to completely trust any one of the plurality of objects. Therefore, a probability that a confidentiality degree of data is affected when the user uses the trusted execution environment is greatly reduced because an object is malicious. In addition, the operating environment information including the full signature is obtained by signing the operating environment information of the trusted execution environment based on the private key of each object in the trusted execution environment. It is equivalent to that the plurality of objects jointly verify the operating environment information of the trusted execution environment, so that reliability of the security that is of the trusted execution environment and that is determined through verification is improved. In conclusion, according to the security verification method in this embodiment of this application, reliability of the trusted execution environment can be improved.

In this case, the user may no longer completely trust any object such as a chip, a cloud platform, or a model/algorithm provider in the trusted execution environment, but trust that these objects do not all want to damage the trusted execution environment, tamper with service program code, or steal data of the user. In this trust mechanism, provided that at least any party is honest and trustworthy, it can be considered that the trusted execution environment is trustworthy. When program code specified by the user is run in a case of a hardware configuration specified by the user to process the data of the user, privacy and security of the data can be ensured.

According to the first aspect, in a first possible implementation of the security verification method, the method further includes: Each object generates a public key and the private key of the object, and outputs the private key to the data processing unit; the data processing unit determines a public key corresponding to a synthesis result of the private keys of all the objects based on the received private key of each object; and the determined public key is used as the public key of the trusted execution environment.

In this manner, it can be ensured that the public key of the trusted execution environment really corresponds to a synthesis result of private keys of the plurality of objects, so that when the public key of the trusted execution environment is used as the root key, accuracy of the root key can be ensured.

According to the first aspect or the first possible implementation of the first aspect, in a second possible implementation of the security verification method, the method further includes: Each object determines operating environment information of the object, and obtains operating environment information of the other object; each object determines the operating environment information of the trusted execution environment based on the operating environment information of the object and the operating environment information of the other object; and the data processing unit signs the operating environment information of the trusted execution environment based on the private key of each object, to obtain the operating environment information including the full signature.

The plurality of objects interact to authenticate environments of each other, so that a signature is generated when the environments of each other are recognized, to further improve verification accuracy of verifying the security of the trusted execution environment based on the operating environment information including the full signature.

According to the second possible implementation of the first aspect, in a third possible implementation of the security verification method, that the data processing unit signs the operating environment information of the trusted execution environment based on the private key of each object, to obtain the operating environment information including the full signature includes: The data processing unit signs the operating environment information of the trusted execution environment based on the private key of each object, to obtain operating environment information that corresponds to each object and that includes a signature share; and the data processing unit performs synthesis based on the operating environment information that corresponds to each object and that includes the signature share, to obtain the operating environment information including the full signature.

In this manner, the operating environment information including the full signature is generated in a more flexible manner.

According to any one of the first aspect or the possible implementations of the first aspect, in a fourth possible implementation of the security verification method, when it is determined that the trusted execution environment is secure, the method further includes: The data processing unit signs a communication key of the trusted execution environment based on the private key of each object, to obtain a communication key including the full signature. The communication key including the full signature is used to encrypt data that is input by the user equipment into the trusted execution environment.

In this manner, in an external communication process of the trusted execution environment, a communication key for protecting communication data is obtained through joint signing by the plurality of objects, so that security of data communication can be improved.

According to the fourth possible implementation of the first aspect, in a fifth possible implementation of the security verification method, that the data processing unit signs a communication key of the trusted execution environment based on the private key of each object, to obtain a communication key including the full signature includes: The data processing unit signs the communication key of the trusted execution environment based on the private key of each object, to obtain a communication key that corresponds to each object and that includes the signature share; and the data processing unit performs synthesis based on the communication key that corresponds to each object and that includes the signature share, to obtain the communication key including the full signature.

In this manner, the communication key including the full signature is generated in a more flexible manner.

According to any one of the second to the fifth possible implementations of the first aspect, in a sixth possible implementation of the security verification method, the objects include a chip, and operating environment information of the chip includes at least one of a chip parameter and a code summary of a user-trusted application run by the chip; and that each object determines operating environment information of the object, and obtains operating environment information of the other object includes: obtaining, for each chip, operating environment information of the chip based on at least one of a chip parameter of the chip and a code summary of a user-trusted application run by the chip; sending an information obtaining request to the other object different from the chip, where the information obtaining request is used to obtain the operating environment information of the other object; and outputting the operating environment information of the chip to the other object different from the chip when receiving an information obtaining request from the other object.

In this manner, self-measurement of the chip and mutual measurement between the chip and the other object can be supported, to improve diversity of the trusted execution environment.

According to any one of the second to the sixth possible implementations of the first aspect, in a seventh possible implementation of the security verification method, the objects include a cloud platform, and operating environment information of the cloud platform includes at least one of software configuration information, virtual machine configuration information, and server configuration information; and that each object determines operating environment information of the object, and obtains operating environment information of the other object includes: obtaining, for each cloud platform, operating environment information of the cloud platform based on at least one of software configuration information, virtual machine configuration information, and server configuration information of the cloud platform; for each of the other object, when the object is deployed on the cloud platform, determining operating environment information of the object based on deployment information of the object; or when the object is not deployed on the cloud platform, sending an information obtaining request to the object, where the information obtaining request is used to obtain operating environment information of the object; and outputting the operating environment information of the cloud platform to the other object different from the cloud platform when receiving the information obtaining request from the other object.

In this manner, self-measurement of the cloud platform and mutual measurement between the cloud platform and the other object can be supported, to further improve diversity of the trusted execution environment.

According to any one of the first aspect or the possible implementations of the first aspect, in an eighth possible implementation of the security verification method, verifying the security of the trusted execution environment includes: determining whether the public key of the trusted execution environment corresponds to the full signature, and when the public key of the trusted execution environment corresponds to the full signature, determining that the trusted execution environment is secure.

In this manner, the security of the trusted execution environment can be verified in a simple manner, to reduce data processing costs, and reduce verification implementation complexity.

According to any one of the first aspect or the second to the seventh possible implementations of the first aspect, in a ninth possible implementation of the security verification method, verifying the security of the trusted execution environment includes: determining whether a synthesis result of the public keys of all the objects is consistent with the public key of the trusted execution environment, and when the synthesis result of the public keys of all the objects is consistent with the public key of the trusted execution environment, determining that the public key of the trusted execution environment is correct; and determining whether the public key of the trusted execution environment corresponds to the full signature, and when the public key of the trusted execution environment is correct and the public key of the trusted execution environment corresponds to the full signature, determining that the trusted execution environment is secure.

Correctness of the public key of the trusted execution environment is also checked, so that reliability of a verification result of the security of the trusted execution environment can be improved, and a verification manner is more flexible.

According to any one of the first aspect or the second to the seventh possible implementations of the first aspect, in a tenth possible implementation of the security verification method, verifying the security of the trusted execution environment includes: determining correctness of a public key certificate of each object, and when the public key certificate of each object is correct, determining that a synthesis result of the public keys of all the objects is correct; determining whether the synthesis result of the public keys of all the objects is consistent with the public key of the trusted execution environment, and when the synthesis result of the public keys of all the objects is correct and the synthesis result of the public keys of all the objects is consistent with the public key of the trusted execution environment, determining that the public key of the trusted execution environment is correct; and determining whether the public key of the trusted execution environment corresponds to the full signature, and when the public key of the trusted execution environment is correct and the public key of the trusted execution environment corresponds to the full signature, determining that the trusted execution environment is secure.

Both correctness of the synthesis result of the public keys of all the objects and the correctness of the public key of the trusted execution environment are checked, so that the reliability of the verification result of the security of the trusted execution environment is further improved, and the verification manner is more flexible.

According to any one of the first to the tenth possible implementations of the first aspect, in an eleventh possible implementation of the security verification method, that each object generates a public key and the private key of the object, and outputs the private key to the data processing unit includes: generating, for each object, the public key and the private key of the object; outputting the public key certificate of the object to each of the other object different from the object in the trusted execution environment; receiving a public key certificate of the other object; and determining correctness of the public key certificate of the other object, and outputting the private key to the data processing unit when a public key certificate of each of the other object is correct.

The public key certificate of the other object is verified before the private key is output, so that it can be ensured that the other object has reliability.

According to a second aspect, an embodiment of this application provides a data processing system. The system includes a data processing unit and a trusted execution environment, and the trusted execution environment includes two or more objects to be used by user equipment; and the data processing unit is configured to: receive a security verification request initiated by the user equipment for the trusted execution environment; and send operating environment information including a full signature and a public key of the trusted execution environment to the user equipment in response to the security verification request. The operating environment information including the full signature is obtained by signing operating environment information of the trusted execution environment based on a private key of each object in the trusted execution environment, and the public key of the trusted execution environment is obtained based on the private key of each object. The operating environment information including the full signature and the public key of the trusted execution environment are used to verify security of the trusted execution environment.

According to the second aspect, in a first possible implementation of the data processing system, each object is configured to: generate a public key and the private key of the object, and output the private key to the data processing unit; the data processing unit is further configured to determine a public key corresponding to a synthesis result of the private keys of all the objects based on the received private key of each object; and the determined public key is used as the public key of the trusted execution environment.

According to the second aspect or the first possible implementation of the second aspect, in a second possible implementation of the data processing system, each object is further configured to: determine operating environment information of the object, and obtain operating environment information of the other object; and determine the operating environment information of the trusted execution environment based on the operating environment information of the object and the operating environment information of the other object; and the data processing unit is further configured to sign the operating environment information of the trusted execution environment based on the private key of each object, to obtain the operating environment information including the full signature.

According to the second possible implementation of the second aspect, in a third possible implementation of the data processing system, that the data processing unit signs the operating environment information of the trusted execution environment based on the private key of each object, to obtain the operating environment information including the full signature includes: The data processing unit signs the operating environment information of the trusted execution environment based on the private key of each object, to obtain operating environment information that corresponds to each object and that includes a signature share; and the data processing unit performs synthesis based on the operating environment information that corresponds to each object and that includes the signature share, to obtain the operating environment information including the full signature.

According to any one of the second aspect or the possible implementations of the second aspect, in a fourth possible implementation of the data processing system, when it is determined that the trusted execution environment is secure, the data processing unit is further configured to sign a communication key of the trusted execution environment based on the private key of each object, to obtain a communication key including the full signature. The communication key including the full signature is used to encrypt data that is input by the user equipment into the trusted execution environment.

According to the fourth possible implementation of the second aspect, in a fifth possible implementation of the data processing system, that the data processing unit signs a communication key of the trusted execution environment based on the private key of each object, to obtain a communication key including the full signature includes: The data processing unit signs the communication key of the trusted execution environment based on the private key of each object, to obtain a communication key that corresponds to each object and that includes the signature share; and the data processing unit performs synthesis based on the communication key that corresponds to each object and that includes the signature share, to obtain the communication key including the full signature.

According to any one of the second to the fifth possible implementations of the second aspect, in a sixth possible implementation of the data processing system, the objects include a chip, and operating environment information of the chip includes at least one of a chip parameter and a code summary of a user-trusted application run by the chip; and that each object determines operating environment information of the object, and obtains operating environment information of the other object includes: obtaining, for each chip, operating environment information of the chip based on at least one of a chip parameter of the chip and a code summary of a user-trusted application run by the chip; sending an information obtaining request to the other object different from the chip, where the information obtaining request is used to obtain the operating environment information of the other object; and outputting the operating environment information of the chip to the other object different from the chip when receiving an information obtaining request from the other object.

According to any one of the second to the sixth possible implementations of the second aspect, in a seventh possible implementation of the data processing system, the objects include a cloud platform, and operating environment information of the cloud platform includes at least one of software configuration information, virtual machine configuration information, and server configuration information; and that each object determines operating environment information of the object, and obtains operating environment information of the other object includes: obtaining, for each cloud platform, operating environment information of the cloud platform based on at least one of software configuration information, virtual machine configuration information, and server configuration information of the cloud platform; for each of the other object, when the object is deployed on the cloud platform, determining operating environment information of the object based on deployment information of the object; or when the object is not deployed on the cloud platform, sending an information obtaining request to the object, where the information obtaining request is used to obtain operating environment information of the object; and outputting the operating environment information of the cloud platform to the other object different from the cloud platform when receiving the information obtaining request from the other object.

According to any one of the second aspect or the possible implementations of the second aspect, in an eighth possible implementation of the data processing system, the user equipment is configured to: determine whether the public key of the trusted execution environment corresponds to the full signature, and when the public key of the trusted execution environment corresponds to the full signature, determine that the trusted execution environment is secure.

According to any one of the second aspect or the second to the seventh possible implementations of the second aspect, in a ninth possible implementation of the data processing system, the user equipment is configured to: determine whether a synthesis result of the public keys of all the objects is consistent with the public key of the trusted execution environment, and when the synthesis result of the public keys of all the objects is consistent with the public key of the trusted execution environment, determine that the public key of the trusted execution environment is correct; and determine whether the public key of the trusted execution environment corresponds to the full signature, and when the public key of the trusted execution environment is correct and the public key of the trusted execution environment corresponds to the full signature, determine that the trusted execution environment is secure.

According to any one of the second aspect or the second to the seventh possible implementations of the second aspect, in a tenth possible implementation of the data processing system, the user equipment is configured to: determine correctness of a public key certificate of each object, and when the public key certificate of each object is correct, determine that a synthesis result of the public keys of all the objects is correct; determine whether the synthesis result of the public keys of all the objects is consistent with the public key of the trusted execution environment, and when the synthesis result of the public keys of all the objects is correct and the synthesis result of the public keys of all the objects is consistent with the public key of the trusted execution environment, determine that the public key of the trusted execution environment is correct; and determine whether the public key of the trusted execution environment corresponds to the full signature, and when the public key of the trusted execution environment is correct and the public key of the trusted execution environment corresponds to the full signature, determine that the trusted execution environment is secure.

According to any one of the first to the tenth possible implementations of the second aspect, in an eleventh possible implementation of the data processing system, that each object generates a public key and the private key of the object, and outputs the private key to the data processing unit includes: generating, for each object, the public key and the private key of the object; outputting the public key certificate of the object to each of the other object different from the object in the trusted execution environment; receiving a public key certificate of the other object; and determining correctness of the public key certificate of the other object, and outputting the private key to the data processing unit when a public key certificate of each of the other object is correct.

According to a third aspect, an embodiment of this application provides a data processing system, including a processor; and a memory, configured to store instructions that can be executed by the processor. When the processor is configured to execute the instructions, the data processing unit in one or several of the first aspect or a plurality of possible implementations of the first aspect is implemented.

According to a fourth aspect, an embodiment of this application provides a nonvolatile computer-readable storage medium. The nonvolatile computer-readable storage medium stores computer program instructions, and when the computer program instructions are executed by a processor, the data processing unit in one or several of the first aspect or a plurality of possible implementations of the first aspect is implemented.

According to a fifth aspect, an embodiment of this application provides a computer program product, including computer-readable code or a nonvolatile computer-readable storage medium carrying the computer-readable code. When the computer-readable code runs in an electronic device, a processor in the electronic device executes the data processing unit in one or several of the first aspect or a plurality of possible implementations of the first aspect.

These aspects and other aspects of this application are more concise and more comprehensive in descriptions of the following embodiments (a plurality of embodiments).

### BRIEF DESCRIPTION OF DRAWINGS

Accompanying drawings included in this specification and constituting a part of this specification and this specification jointly show example embodiments, features, and aspects of this application, and are intended to explain principles of this application.
FIG. 1 is a schematic diagram of a procedure of a remote attestation method in the conventional technology;
FIG. 2 shows an example of a data encryption method in a conventional technology 1;
FIG. 3a shows an example of a remote attestation manner of a trusted execution environment in which a chip serves as a core controller according to an embodiment of this application;
FIG. 3b shows an example of a remote attestation manner of a trusted execution environment in which a cloud platform serves as a core controller according to an embodiment of this application;
FIG. 4 shows an example application scenario of a data processing system according to an embodiment of this application;
FIG. 5 is a schematic diagram of a method for generating a root key of a trusted execution environment according to an embodiment of this application;
FIG. 6 is a schematic diagram of a security verification method according to an embodiment of this application;
FIG. 7 is a schematic diagram of a method for generating operating environment information including a full signature according to an embodiment of this application;
FIG. 8 is a schematic diagram of an example method for encrypting data of a user according to an embodiment of this application; and
FIG. 9 is a diagram of an example structure of a data processing system according to an embodiment of this application.

### DESCRIPTION OF EMBODIMENTS

The following describes various example embodiments, features, and aspects of this application in detail with reference to the accompanying drawings. Same reference numerals in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment, or illustration". Any embodiment described as "example" is not necessarily explained as being superior or better than other embodiments.

In addition, numerous specific details are given in the following specific implementations to better describe this application. A person skilled in the art should understand that this application may still be implemented without the specific details. In some embodiments, methods, means, components, and circuits well known by a person skilled in the art are not described in detail, so that a main purpose of this application is highlighted.

The following explains terms that may appear in this specification.

Heterogeneous computing chip (heterogeneous computing chip, HCC): In a computing task that requires a large amount of computing power (for example, when a complex neural network model is used), computing power of a single central processing unit (central processing unit, CPU) is usually overwhelmed, and various other processors such as an embedded neural-network processing unit (neural-network processing unit, NPU) and a graphics processing unit (graphics processing unit, GPU) need to support and share a computing operation. These chips (processors) that jointly provide a computing operation are collectively referred to as a heterogeneous computing chip.

A trusted execution environment TEE is a secure zone in a processor. The trusted execution environment runs in an independent environment and runs in parallel with an operating system. The processor ensures that both confidentiality and integrity of code and data in the trusted execution environment are protected. Both hardware and software are used to protect the data and the code, and the trusted execution environment TEE is more secure than the operating system. A trusted application TA running in the trusted execution environment TEE may access all functions of the processor and a memory, and hardware isolation protects these components from being affected by another user application running in a main operating system.

Remote attestation (remote attestation, RA) is a mechanism that may enable a user to verify security of a trusted execution environment TEE. When attestation succeeds, it may be considered that the trusted execution environment TEE and a trusted application running in the TEE are both selected by the user and are not tampered with, to provide integrity protection for secure computing and trusted computing.

A secure multi-party computation (secure multi-party computation, SMPC) protocol is a sub-domain of cryptography. A plurality of objects are allowed to separately input data when the plurality of objects distrust each other, to perform collaborative computing and output a computing result, and it is ensured that any party cannot obtain input data content of the other object but the computing result.

A core technology of secure computing and trusted computing is data isolation, in other words, protecting data of a user from being accessed by another entity (including a superuser, for example, an administrator). Data isolation may be implemented based on a trusted execution environment TEE. The following describes several methods for constructing a trusted execution environment in the conventional technology.

A conventional technology 1 proposes that a protected trust zone is obtained through division from address space (a processor and a memory) of an application, and becomes a container referred to as an enclave. Different applications may correspond to different containers (trust zones). The container may be configured to isolate different applications (for example, trusted applications TAs), to prevent the different applications from accessing data of each other. Even an application with a high permission level cannot perform cross-zone access, so that code and data in the container can be protected from being damaged by malicious software. A trusted execution environment TEE may be an area including each container.

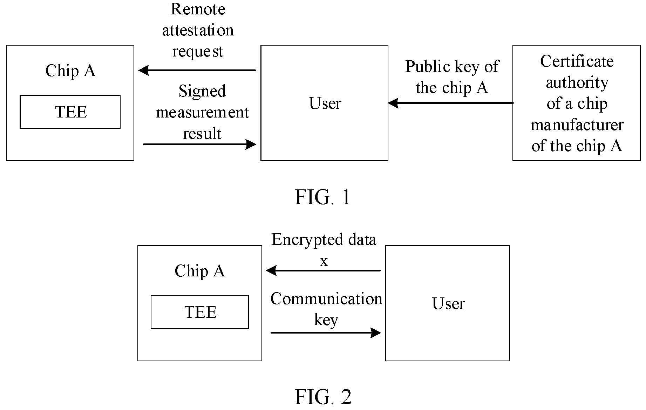

To verify security of the trusted execution environment TEE, the conventional technology 1 further proposes a remote attestation method. FIG. 1 is a schematic diagram of a procedure of a remote attestation method in the conventional technology.

As shown in FIG. 1, assuming that a controller of the trusted execution environment TEE is a chip A, a root key of the trusted execution environment TEE may be a public key and a private key of the chip A. A user first submits a remote attestation request to the trusted execution environment TEE. After receiving the remote attestation request, the trusted execution environment TEE measures an operating environment of the trusted execution environment TEE, to obtain a measurement result including a hardware environment parameter of the trusted execution environment TEE and a software program code summary, and signs the measurement result based on a private key in the root key of the trusted execution environment TEE. The signed measurement result is fed back to the user. The user may check the signed measurement result, to determine whether the hardware environment parameter of the trusted execution environment TEE and the software program code summary meet a requirement. If the requirement is met, for example, the public key of the chip A may be obtained from a certificate authority (certificate authority, CA) of a chip manufacturer of the chip A, and whether a signature on the measurement result is a signature of a private key corresponding to the public key is verified based on the obtained public key. If verification succeeds, it may be considered that the trusted execution environment TEE is secure.

After it is determined that the trusted execution environment TEE is secure, the user may use the trusted execution environment TEE to store and compute data. To ensure data security, the conventional technology 1 further provides a data encryption method. FIG. 2 shows an example of the data encryption method in the conventional technology 1.

As shown in FIG. 2, a communication key of the trusted execution environment TEE is sent to the user, and serves as an encryption key of communication data between the user and the trusted execution environment. The user may encrypt the data based on the communication key, to obtain encrypted data x, and then input the encrypted data x into the trusted execution environment TEE. After receiving the encrypted data x, the trusted execution environment TEE decrypts the encrypted data x based on the communication key, and then computes the data by using a trusted application.

In the conventional technology 1, in the entire trusted execution environment TEE, a unique computing chip serves as a controller, and a built-in private key of the computing chip serves as a trusted root key. In other words, this solution is merely applicable to a scenario in which there is a unique computing chip and there is no another controller. If the trusted execution environment TEE includes a plurality of computing chips or a cloud platform on which the computing chip is deployed also needs to participate in control, a conflict occurs in ownership of a control right of the trusted execution environment TEE. In addition, because the communication key is generated by a single computing chip, the user needs to trust the computing chip. Once the computing chip is faulty, the security of the trusted execution environment cannot be ensured. Consequently, reliability of the trusted execution environment is low.

A conventional technology 2 proposes that hardware and software resources of a system on chip are classified into two parts: a secure world (secure world) and a normal world (normal world). The secure world is equivalent to the trusted execution environment TEE described above. All operations (for example, fingerprint recognition, password processing, data encryption/decryption, and security authentication) that need to be confidential are performed in the secure world. Other operations (for example, a user operating system and various applications) are performed in the normal world. The system on chip has three states: the secure world, the normal world, and a supervisor mode for switching the secure world and the normal world. All operations similar to switching between a privileged process and a non-privileged process are performed in the supervisor mode. A remote attestation manner and a data encryption manner in the conventional technology 2 may be the same as those in the conventional technology 1.

In the conventional technology 2, in the entire trusted execution environment TEE, a unique chip also serves as a controller, and a built-in private key of the chip also serves as a trusted root key. This is also merely applicable to a scenario in which there is a unique computing chip and there is no another controller. If the trusted execution environment TEE includes a plurality of computing chips or a cloud platform on which the computing chip is deployed also needs to participate in control, a conflict occurs in ownership of a control right of the trusted execution environment TEE. In addition, the user has no choice but needs to trust the computing chip. Once the computing chip is faulty, the security of the trusted execution environment cannot be ensured. Consequently, reliability of the trusted execution environment is low.

With continuous development of secure computing and trusted computing, application fields of secure computing and trusted computing are also continuously expanded, higher computing power is required, and a more complex algorithm is also required. In these scenarios, solutions in the conventional technology 1 and the conventional technology 2 may be difficult to provide a trusted execution environment TEE that meets a requirement of the user. In view of this, a conventional technology 3 provides a method for jointly constructing a trusted execution environment in which a cloud platform serves as a controller of the trusted execution environment and a plurality of processors (chips) deployed on the cloud platform each serve as a computing power and algorithm provider. In the conventional technology 3, the cloud platform is responsible for first generating a complete public key and a complete private key of the trusted execution environment. The complete public key and the complete private key are used as a trusted root key. When publishing the complete public key, the cloud platform splits the complete private key into a plurality of private key shares, and distributes the plurality of private key shares to all computing power and algorithm providers.

The cloud platform is responsible for generating and managing the trusted root key, and generation and management of the trusted root key do not need to completely depend on the chip. Therefore, impact exerted on the security of the trusted execution environment when an individual chip is faulty is greatly reduced. However, although the cloud platform participates in management of the root key, the cloud platform does not provide comprehensive measurement of the entire trusted execution environment and does not independently control remote attestation. There is still a problem that a plurality of chips are independent of each other and cannot be coordinated and unified. In addition, in this solution, still a trusted execution environment TEE controlled by a single party is implemented, but only the cloud platform replaces the chip. The user needs to trust the cloud platform. Once the cloud platform is faulty, the security of the trusted execution environment cannot be ensured. Consequently, reliability of the trusted execution environment is low.

Based on this, an embodiment of this application proposes a trusted execution environment TEE in which a chip (or a cloud platform) serves as a core controller, so that the chip (or the cloud platform) is not only responsible for generating and managing a trusted root key, but also responsible for measuring security of the chip (or the cloud platform) and another computing power provider.

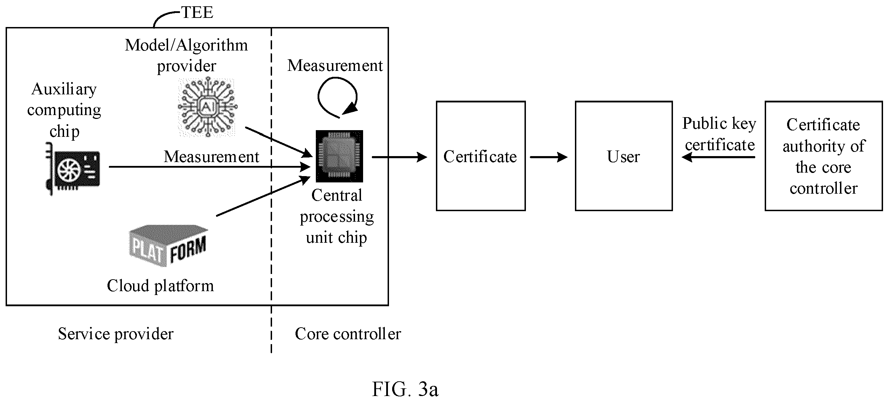

FIG. 3a shows an example of a remote attestation manner of a trusted execution environment in which a chip serves as a core controller according to an embodiment of this application.

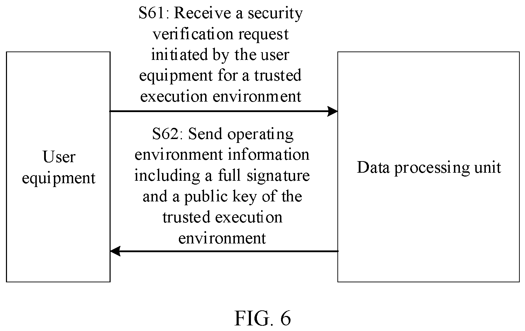

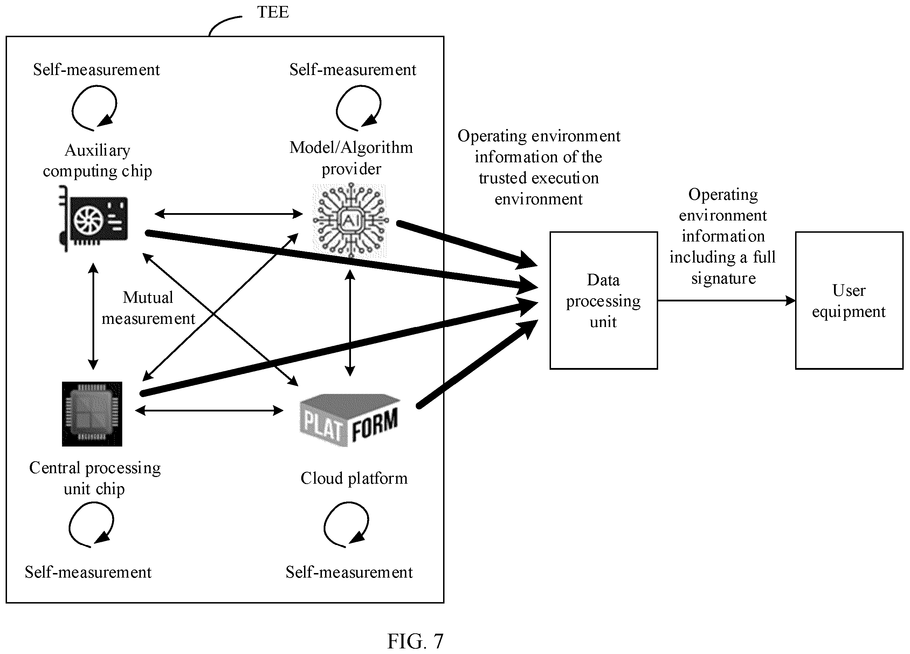

Refer to FIG. 3a. The trusted execution environment TEE may include a plurality of objects such as a central processing unit chip, an auxiliary computing chip, a model/algorithm provider, and a cloud platform. The central processing unit chip serves as a core controller, and the other objects serve as service providers. The core controller may complete measurement of an operating environment of the core controller and an operating environment of each service provider, and perform signature by using a private key of the core controller as a trusted root key, to form a remote attestation certificate. A user may obtain a public key certificate of the core controller from a certificate authority of a manufacturer of the core controller, and verify correctness of the remote attestation certificate, to determine security of the trusted execution environment. For measurement of the operating environment of the core controller and measurement of the operating environment of each service provider, refer to the following descriptions and examples in FIG. 6 and FIG. 7.

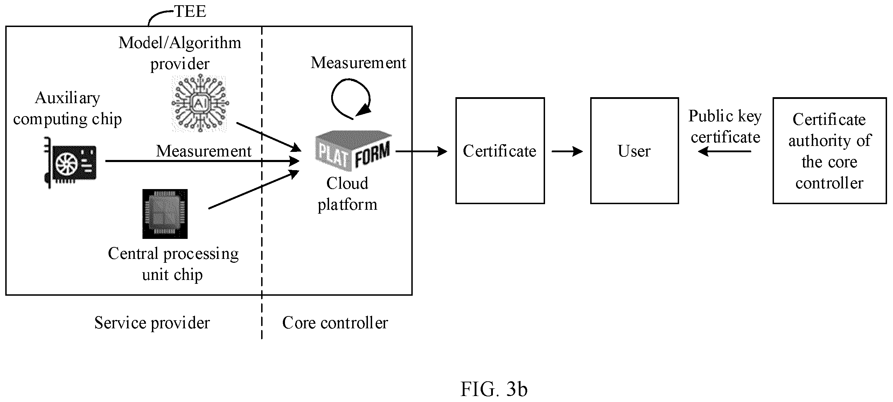

FIG. 3b shows an example of a remote attestation manner of a trusted execution environment in which a cloud platform serves as a core controller according to an embodiment of this application.

Refer to FIG. 3b. The trusted execution environment TEE may include a plurality of objects such as a central processing unit chip, an auxiliary computing chip, a model/algorithm provider, and a cloud platform. The cloud platform serves as a core controller, and the other objects serve as service providers. The core controller may complete measurement of an operating environment of the core controller and measurement of an operating environment of each service provider, and perform signature by using a private key of the core controller as a trusted root key, to form a remote attestation certificate. A user may obtain a public key certificate of the core controller from a certificate authority of a manufacturer of the core controller, and verify correctness of the remote attestation certificate, to determine security of the trusted execution environment. For measurement of the operating environment of the core controller and measurement of the operating environment of each service provider, refer to the following descriptions and examples in FIG. 6 and FIG. 7.

When a remote attestation certificate is formed in the two manners in this embodiment of this application, a used trusted root key of a core controller is a private key of a single chip or a single cloud platform. In other words, the core controller measures an operating environment of the core controller and an operating environment of the other service provider. Further, in consideration that the core controller is a party that wants to destroy a trusted execution environment and forges security of the operating environment of the core controller and/or security of the operating environment of the other object, in this embodiment of this application, security of a trusted execution environment including a plurality of objects in a data processing system may be further verified based on a root key generated based on private keys of the plurality of objects, and the user does not need to completely trust any one of the plurality of objects, to improve reliability of the trusted execution environment.

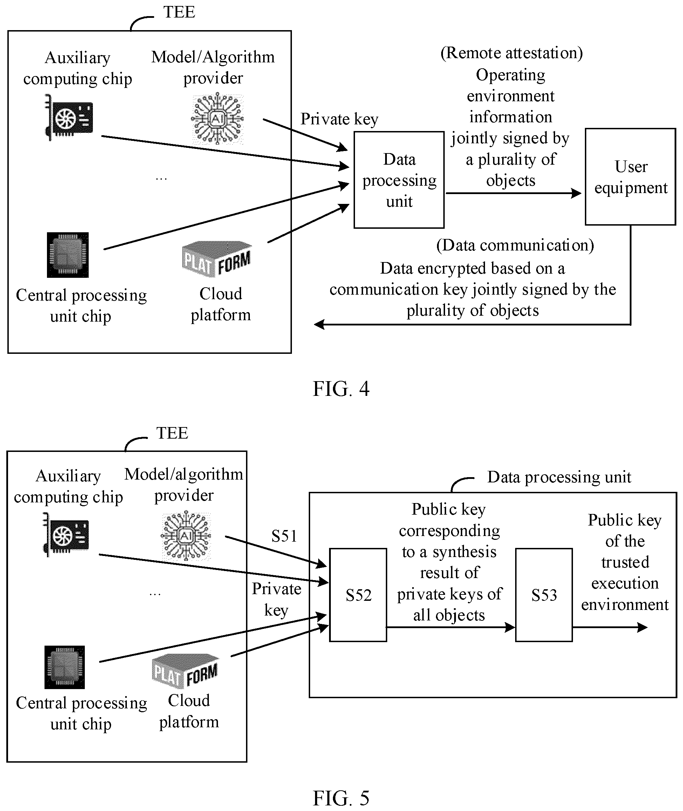

FIG. 4 shows an example application scenario of a data processing system according to an embodiment of this application.

As shown in FIG. 4, the data processing system in this embodiment of this application may include a data processing unit and a trusted execution environment TEE. The trusted execution environment TEE may include two or more objects to be used by user equipment. The objects may be the central processing unit chip, the cloud platform, the auxiliary computing chip, the model/algorithm provider, and the like that are described above.

Each object may be disposed on an independent terminal device or server, or all the objects may be jointly disposed on a same terminal device or server. This is not limited in this application. The data processing unit may be disposed on a same terminal device as one or more objects, or may be separately disposed on a terminal device or a server. For example, the terminal device in this application may be a smartphone, a netbook, a tablet computer, a notebook computer, a wearable electronic device (for example, a smart band or a smartwatch), a TV, a virtual reality device, a speaker, an electronic ink, or the like.

The trusted application described above may run on each hardware chip, and code of the trusted application may include a model and/or an algorithm, and the like. The hardware chip and a model/algorithm provided by the model/algorithm provider may be deployed on the cloud platform, and the cloud platform may provide a trusted execution environment for the user equipment through packaging.

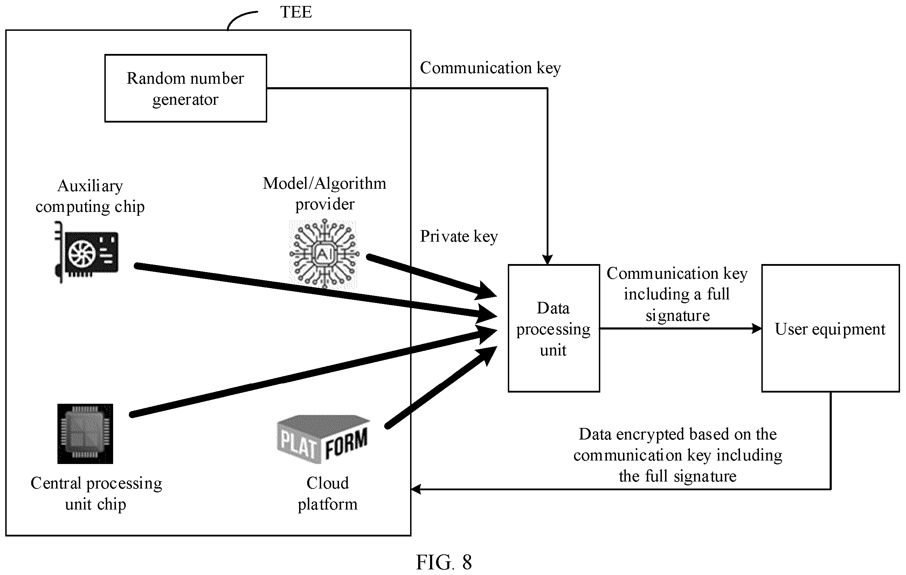

In this application scenario, the data processing system performs a security verification method in embodiments of this application, so that each object can participate in management and control of the trusted execution environment by providing a private key of the object, for example, participate in generation of a root key of the trusted execution environment (for an example of generation of the root key, refer to the following descriptions and related descriptions in FIG. 5), participate in remote attestation performed by the user equipment on security of the trusted execution environment (for an example of remote attestation, refer to the following descriptions and related descriptions in FIG. 6 and FIG. 7), and participate in data transmission from the user equipment to the trusted execution environment (for an example of data transmission, refer to the following descriptions and related descriptions in FIG. 8).

When each object participates in remote attestation performed by the user equipment on the security of the trusted execution environment, a plurality of objects not only can determine operating environment information through self-measurement, but also can determine operating environment information of each other through mutual measurement. Final overall operating environment information of the trusted execution environment is also signed based on private keys of the plurality of objects. This means that the plurality of objects reach a consensus. When the user equipment performs remote attestation on the security of the trusted execution environment and the user equipment transmits data to the trusted execution environment, the user may not need to perform verification with all the objects one by one, but verify the operating environment information (that is, the following described operating environment information including a full signature, which is equivalent to the remote attestation certificate described above) that is jointly signed by the plurality of objects, to greatly improve user experience. When the user equipment transmits data to the trusted execution environment, the communication key used to encrypt data of the user may alternatively be a communication key (that is, the following described communication key including a full signature) used by the plurality of objects to jointly perform signature, to improve communication security.

The following first describes an example method in which a data processing system generates a root key of a trusted execution environment in an embodiment of this application. FIG. 5 is a schematic diagram of a method for generating a root key of a trusted execution environment according to an embodiment of this application.

As shown in FIG. 5, in a possible implementation, the method includes steps S51 to S53.

Step S51: Each object generates a public key and a private key of the object, and outputs the private key to a data processing unit.

Step S52: The data processing unit determines a public key corresponding to a synthesis result of the private keys of all the objects based on the received private key of each object.

Step S53: Use the determined public key as a public key of the trusted execution environment TEE.

In this manner, it can be ensured that the public key of the trusted execution environment really corresponds to a synthesis result of private keys of a plurality of objects, so that when the public key of the trusted execution environment is used as the root key, accuracy of the root key can be ensured.

For example, as a provider of a computing service, each object can generate a public key and a private key of the object in the conventional technology. The public key corresponds to the private key. For each object, after the private key is output to the data processing unit, the private key may be further used to obtain the root key corresponding to the trusted execution environment, operating environment information including a signature share of the object, and a communication key including the signature share of the object.

Optionally, before the private key is output to the data processing unit, each object may verify reliability of the other object different from the object in the trusted execution environment. For example, in a possible implementation, step S51 includes:
generating, for each object, the public key and the private key of the object;
outputting a public key certificate of the object to each of the other object different from the object in the trusted execution environment;
receiving a public key certificate of the other object; and
determining correctness of the public key certificate of the other object, and outputting the private key to the data processing unit when a public key certificate of each of the other object is correct.

The public key certificate of the other object is verified before the private key is output, so that it can be ensured that the other object has reliability.

For example, when each object generates a public key and a private key of the object, a certificate authority of a manufacturer (for example, a chip manufacturer) or an operator (for example, a cloud platform operator) corresponding to the object issues a public key certificate for the object, to attest that a public key really belongs to a chip or a cloud platform. After each object generates a public key and a private key of the object, the object outputs, to the other object different from the object in the trusted execution environment, the public key certificate issued by the certificate authority. In addition, the object also receives a public key certificate of the other object different from the object in the trusted execution environment.

In this case, each object may determine correctness of all received public key certificates. For example, the object may send, to a corresponding certificate authority that issues each public key certificate, a query request including related information (for example, a certificate code) of the public key certificate. After receiving the query request, the certificate authority may check whether the certificate is really issued by the certificate authority, and feed back a query result to the object that sends the query request. For example, when determining, through a check, that the certificate is really issued by the certificate authority, the certificate authority may send a query result indicating that the certificate is correct; or when determining, through a check, that the certificate is not issued by the certificate authority, the certificate authority may send a query result indicating that the certificate is incorrect. In this way, each object can determine correctness of a public key certificate of the other object based on a received query result. When determining that public key certificates of all the other objects are correct, the object may consider that the other objects have reliability, and then output a private key of the object to the data processing unit.

It is possible that each object may not receive a public key certificate of any object different from the object. In this case, when determining correctness of the public key certificate of the other object, the object only needs to determine correctness of a public key certificate received by the object. Even when an object does not receive any public key certificate, the object may directly output a private key of the object to the data processing unit, without determining whether the other object is trustworthy.

The data processing unit may support a secure multi-party computation protocol in the conventional technology. In step S52, when determining, based on the received private key of each object, the public key corresponding to the synthesis result of the private keys of all the objects, the data processing unit may determine the public key based on the secure multi-party computation protocol.

The following describes an example implementation of obtaining, based on the secure multi-party computation protocol, the public key corresponding to the synthesis result of the private keys of all the objects in this embodiment of this application.

For example, the secure multi-party computation protocol may be implemented by the data processing unit. Each object inputs a private key of the object into the data processing unit as a secret input, so that the other object cannot learn of specific content of the private key input by the object. When the input is not disclosed, the data processing unit may compute a public key by executing the secure multi-party computation protocol. The public key may be the public key corresponding to the synthesis result of the private keys of all the objects. The synthesis result of the private keys of all the objects is not used as a key.

Optionally, after the public key (referred to as a computed public key below) corresponding to the synthesis result of the private keys of all the objects is computed, each object may further provide a public key of the object for the other object, so that the other object verifies correctness of the computed public key.

For example, verification may include two aspects: Aspect 1: Whether the private keys of all the objects are input into the data processing unit for computing. Aspect 2: Whether the synthesis result of the public keys of all the objects is consistent with the computed public key. When a condition that the private keys of all the objects are input into the data processing unit for computing, and the synthesis result of the public keys of all the objects is consistent with the computed public key, it is determined that the computed public key is correct.

A person skilled in the art should understand that a manner of computing the public key corresponding to the synthesis result of the private keys of all the objects shown in FIG. 5 is merely an example. In an actual application, there may be more or fewer objects in the trusted execution environment. For example, when there are a minimum quantity of objects, the objects may include only one central processing unit chip and one auxiliary computing chip. In other words, only the central processing unit chip and one auxiliary computing chip participate in computing of the public key. For another example, when there are a maximum quantity of objects, the objects in the trusted execution environment may include a plurality of central processing unit chips, a plurality of auxiliary computing chips, a plurality of cloud platforms, and a plurality of model/algorithm providers, and even may further include a software provider such as an operating system. All these objects may participate in computing of the public key. A quantity and types of specific objects that participate in computing of the public key are not limited in this application.

In step S53, optionally, the data processing unit may directly use the computed public key as the public key of the trusted execution environment; or may first perform the foregoing verification method to verify correctness of the computed public key, and then use the computed public key as the public key of the trusted execution environment after determining, through verification, that the computed public key is correct. In this case, the computed public key is used as the root key of the trusted execution environment, so that reliability of the trusted execution environment is ensured.

In this embodiment of this application, when the computed public key is obtained in the method shown in FIG. 5, a quantity of private keys that can be input based on the secure multi-party computation protocol may be not limited, the trusted execution environment can support an unlimited quantity of objects, and a type and a method of the secure multi-party computation protocol may be not limited. In this way, flexibility of a manner of determining the public key of the trusted execution environment can be improved.

The following describes an example security verification method in an embodiment of this application. FIG. 6 is a schematic diagram of a security verification method according to an embodiment of this application.

Before a user uses a trusted execution environment, if the user needs to determine security of the trusted execution environment, the user may submit a security verification request to a data processing unit. As shown in FIG. 6, in a possible implementation, the method includes steps S61 and S62.

Step S61: The data processing unit receives a security verification request initiated by user equipment for the trusted execution environment.

Step S62: The data processing unit sends operating environment information including a full signature and a public key of the trusted execution environment to the user equipment in response to the security verification request, where the operating environment information including the full signature is obtained by signing operating environment information of the trusted execution environment based on a private key of each object in the trusted execution environment, and the public key of the trusted execution environment is obtained based on the private key of each object.

The operating environment information including the full signature and the public key of the trusted execution environment are used to verify the security of the trusted execution environment.

For example, when the data processing unit receives the security verification request (which is equivalent to the remote attestation request described above), it may be considered that the user needs to verify the security of the trusted execution environment provided for the user. Therefore, in response to the security verification request, the data processing unit may send, to the user equipment, the operating environment information (which is equivalent to the remote attestation certificate described above) including the full signature and the public key of the trusted execution environment. The public key of the trusted execution environment is generated when the trusted execution environment is constructed. For an example obtaining manner of the public key, refer to the foregoing descriptions and related descriptions in FIG. 5. The operating environment information including the full signature may be generated and sent by the data processing unit after the security verification request is received, or may be generated after the trusted execution environment is constructed and sent when the security verification request is received. This is not limited in this application. For an example manner of generating the operating environment information including the full signature, refer to FIG. 7 and related descriptions. The user equipment may verify the security of the trusted execution environment based on the operating environment information including the full signature and the public key of the trusted execution environment.

According to the security verification method in this embodiment of this application, the data processing unit receives the security verification request initiated by the user equipment for the trusted execution environment; and sends the operating environment information including the full signature and the public key of the trusted execution environment to the user equipment in response to the security verification request, so that the user equipment can obtain information used to verify security of the trusted execution environment. The public key of the trusted execution environment is obtained based on the private key of each object. It is equivalent to that a plurality of objects in the trusted execution environment jointly generate, control, and use a root key of the trusted execution environment, and a user does not need to completely trust any one of the plurality of objects. Therefore, a probability that a confidentiality degree of data is affected when the user uses the trusted execution environment is greatly reduced because an object is malicious. In addition, the operating environment information including the full signature is obtained by signing the operating environment information of the trusted execution environment based on the private key of each object in the trusted execution environment. It is equivalent to that the plurality of objects jointly verify the operating environment information of the trusted execution environment, so that reliability of the security that is of the trusted execution environment and that is determined through verification is improved. In conclusion, according to the security verification method in this embodiment of this application, reliability of the trusted execution environment can be improved.

In this case, the user may no longer completely trust any object such as a chip, a cloud platform, or a model/algorithm provider in the trusted execution environment, but trust that these objects do not all want to damage the trusted execution environment, tamper with service program code, or steal data of the user. In this trust mechanism, provided that at least any party is honest and trustworthy, it can be considered that the trusted execution environment is trustworthy. When program code specified by the user is run in a case of a hardware configuration specified by the user to process data of the user, privacy and security of the data can be ensured.

The following first describes an example method for generating the operating environment information including the full signature. FIG. 7 is a schematic diagram of a method for generating operating environment information including a full signature according to an embodiment of this application.

As shown in FIG. 7, in a possible implementation, the method further includes:
Each object determines operating environment information of the object, and obtains operating environment information of the other object;
each object determines the operating environment information of the trusted execution environment based on the operating environment information of the object and the operating environment information of the other object; and
the data processing unit signs the operating environment information of the trusted execution environment based on the private key of each object, to obtain the operating environment information including the full signature.

The plurality of objects interact to authenticate environments of each other, so that a signature is generated when the environments of each other are recognized, to further improve verification accuracy of verifying the security of the trusted execution environment based on the operating environment information including the full signature.

For example, as shown in FIG. 7, each object may determine operating environment information of the object through measurement of an operating environment of the object (that is, self-measurement), and obtain operating environment information of the other object through mutual measurement of operating environments of objects (that is, mutual measurement). For a different object, there may be a different manner of determining operating environment information of the object and obtaining operating environment information of the other object. The following respectively provides, by using examples in which the object is a chip and a cloud platform, examples of determining the operating environment information of the object and obtaining the operating environment information of the other object.

Each object may determine the operating environment information of the trusted execution environment based on operating environment information of the object and operating environment information of the other object, so that the operating environment information of the trusted execution environment includes operating environment information of all the objects. Each object may input, into the data processing unit, the operating environment information that is of the trusted execution environment and that is determined by the object.

In an ideal state, if each object is really trustworthy, and no error occurs in measurement of an operating environment of each object and mutual measurement of operating environments of objects, the operating environment information that is of the trusted execution environment and that is determined by all the objects may be the same. In this case, the data processing unit may sign, based on the private key of each object (which is input into the data processing unit in step S51), operating environment information that is of the trusted execution environment and that is determined by any object, to obtain the operating environment information including the full signature. In view of this, this embodiment of this application provides two example implementations.

In a possible implementation, that the data processing unit signs the operating environment information of the trusted execution environment based on the private key of each object, to obtain the operating environment information including the full signature may be: using, as a signature object that needs to be signed, operating environment information that is of the trusted execution environment and that is input by any object; and signing the signature object based on a private key previously input by each object into the data processing unit, to directly obtain and output operating environment information including a signature of each object (that is, the operating environment information including the full signature).

In another possible implementation, that the data processing unit signs the operating environment information of the trusted execution environment based on the private key of each object, to obtain the operating environment information including the full signature includes:
The data processing unit signs the operating environment information of the trusted execution environment based on the private key of each object, to obtain operating environment information that corresponds to each object and that includes a signature share; and
the data processing unit performs synthesis based on the operating environment information that corresponds to each object and that includes the signature share, to obtain the operating environment information including the full signature.

In this manner, the operating environment information including the full signature is generated in a more flexible manner.

For example, that the data processing unit signs the operating environment information of the trusted execution environment based on the private key of each object, to obtain the operating environment information including the full signature may alternatively be: using, as a signature object that needs to be signed, operating environment information that is of the trusted execution environment and that is input by any object; and signing the signing object based on a private key (which is input when the public key of the trusted execution environment is determined) previously input by each object into the data processing unit, to obtain operating environment information that corresponds to each object and that includes a signature share, and then synthesize the operating environment information that corresponds to each object and that includes the signature share, so as to obtain and output the operating environment information including the full signature.

A person skilled in the art should understand that, although only two example implementations of obtaining the operating environment information with the full signature are provided in this embodiment of this application, a manner of obtaining the operating environment information with the full signature in an actual application does not need to be limited thereto. Any example implementation that can be implemented in the conventional technology to obtain the operating environment information with the full signature may be applied to this embodiment of this application. This is not limited in this embodiment of this application.

The following describes an example of a manner in which the object determines the operating environment information of the object and obtains the operating environment information of the other object when the object is a chip and a cloud platform.

In a possible implementation, the objects include a chip, and operating environment information of the chip includes at least one of a chip parameter and a code summary of a user-trusted application run by the chip; and
that each object determines operating environment information of the object, and obtains operating environment information of the other object includes:
obtaining, for each chip, operating environment information of the chip based on at least one of a chip parameter of the chip and a code summary of a user-trusted application run by the chip;
sending an information obtaining request to the other object different from the chip, where the information obtaining request is used to obtain the operating environment information of the other object; and
outputting the operating environment information of the chip to the other object different from the chip when receiving an information obtaining request from the other object.

For example, as shown in FIG. 7, objects included in the trusted execution environment may include various types of chips, for example, hardware chips such as the central processing unit chip and the auxiliary computing chip. For each hardware chip, a specific chip parameter, for example, a dominant frequency or a bus frequency of the chip, is designed in advance, and can represent a hardware environment of the chip. Code of a user-trusted application runs on the chip, and a summary of the code can represent a software environment of the chip. In this case, that each chip completes measurement of an operating environment (software and/or hardware) of the chip may be obtaining operating environment information of the chip based on at least one of a chip parameter of the chip and a code summary of a user-trusted application run by the chip, and determining, based on the operating environment information, whether an operating environment of the chip meets a requirement.

It can be understood that, data that can represent a hardware environment of the chip is not only the chip parameter, and data that may represent a software environment of the chip is not only the code summary of the user-trusted application run by the chip, provided that the data that can represent the hardware environment and/or the software environment of the chip is really used when the chip obtains the operating environment information of the chip. Specific data used when the chip obtains the operating environment information of the chip is not limited in this embodiment of this application.

The chip may send an information obtaining request (for example, a measurement task) to the other object different from the chip, to complete mutual measurement between the chip and the other object. The information obtaining request is used to obtain operating environment information of the other object. Refer to FIG. 7. The other object may include a model/algorithm provider and a cloud platform. Optionally, there may be no need to send the information obtaining request to all objects other than the chip. For example, when the central processing unit chip sends the information obtaining request to only the cloud platform, it may be considered that the central processing unit chip does not need to measure an operating environment of the other object different from the cloud platform. The other object that receives the information obtaining request may feed back the determined operating environment information of the other object to the chip that initiates the information obtaining request. In this case, the chip may measure received operating environment information of the other object, to determine whether an operating environment of the other object meets a requirement.

Similarly, the chip outputs the operating environment information of the chip to the other object different from the chip when receiving the information obtaining request from the other object. In this way, the other object can measure the operating environment of the chip.

In this manner, self-measurement of the chip and mutual measurement between the chip and the other object can be supported, to improve diversity of the trusted execution environment.

In a possible implementation, the objects include a cloud platform, and operating environment information of the cloud platform includes at least one of software configuration information, virtual machine configuration information, and server configuration information; and
that each object determines operating environment information of the object, and obtains operating environment information of the other object includes:
obtaining, for each cloud platform, operating environment information of the cloud platform based on at least one of software configuration information, virtual machine configuration information, and server configuration information of the cloud platform;
for each of the other object, when the object is deployed on the cloud platform, determining operating environment information of the object based on deployment information of the object; or
when the object is not deployed on the cloud platform, sending an information obtaining request to the object, where the information obtaining request is used to obtain operating environment information of the object; and
outputting the operating environment information of the cloud platform to the other object different from the cloud platform when receiving information obtaining request from the other object.

For example, as shown in FIG. 7, objects included in the trusted execution environment may include a cloud platform. For each cloud platform, a server (for example, a bare metal server), and the like are preconfigured. Therefore, server configuration information can represent a hardware environment of the cloud platform. Software, a virtual machine, and the like are configured. Therefore, software configuration information and virtual machine configuration information can represent a software environment of the cloud platform. In this case, that each cloud platform completes measurement of an operating environment (software and/or hardware) of the cloud platform may be obtaining operating environment information of the cloud platform based on at least one of software configuration information, virtual machine configuration information, and server configuration information of the cloud platform, and determining, based on the operating environment information, whether an operating environment of the cloud platform meets a requirement.

It can be understood that, data that can represent a hardware environment of the cloud platform is not only the server configuration information, and data that may represent a software environment of the cloud platform is not only the software configuration information or the virtual machine configuration information, provided that the data that can represent the hardware environment and/or the software environment of the cloud platform is really used when the cloud platform obtains the operating environment information of the cloud platform. Specific data used when the cloud platform obtains the operating environment information of the cloud platform is not limited in this embodiment of this application.

The cloud platform needs to obtain operating environment information of the other object different from the cloud platform, to complete mutual measurement between the cloud platform and the other object. Refer to FIG. 7. The other object may include a model/algorithm provider and a chip. In an example, the model/algorithm provider and the chip may be deployed on the cloud platform. In a process of deploying these objects on the cloud platform, software/hardware operating environment information of these objects has been provided to the cloud platform. Therefore, the cloud platform can directly measure the operating environment of these objects based on the operating environment information obtained during deployment. For an object (not shown) that is not deployed on the cloud platform, the cloud platform may send an information obtaining request to the object. The information obtaining request is used to obtain operating environment information of the object. Optionally, in consideration that a software/hardware operating environment of the object may change after the object is deployed on the cloud platform, the cloud platform may also send an information obtaining request to the object deployed on the cloud platform, to obtain the operating environment information of the object again, so as to ensure accuracy of obtained operating environment information of the other object different from the object.

Optionally, there may be no need to send the information obtaining request to all objects other than the chip. For example, when the cloud platform sends the information obtaining request to only the central processing unit chip, it may be considered that the cloud platform does not need to measure an operating environment of the other object different from the central processing unit chip. The other object that receives the information obtaining request may feed back the determined operating environment information of the other object to the cloud platform that initiates the information obtaining request. In this case, the cloud platform may measure received operating environment information of the other object, to determine whether an operating environment of the other object meets a requirement.

Similarly, the cloud platform outputs the operating environment information of the cloud platform to the other object different from the cloud platform when receiving the information obtaining request from the other object. In this way, the other object can measure the operating environment of the cloud platform.

In this manner, self-measurement of the cloud platform and mutual measurement between the cloud platform and the other object can be supported, to further improve diversity of the trusted execution environment.

A person skilled in the art should understand that, in an actual application, in addition to the chip and the cloud platform, the trusted execution environment may further include more types of objects, for example, the model/algorithm provider described above. For a hardware object in these other types of objects, for a manner of self-measurement of the hardware object and a manner of mutual measurement between the hardware object and the other object, refer to the foregoing chip. For a software object in these other types of objects, for a manner of self-measurement of the software object and a manner of mutual measurement between the software object and the other object, refer to the foregoing cloud platform. Details are not described herein again.

After the data processing unit sends, to the user equipment, the operating environment information including the full signature and the public key of the trusted execution environment, the user equipment may verify the security of the trusted execution environment based on the operating environment information including the full signature and the public key of the trusted execution environment. The following describes several example methods in which the user equipment verifies the security of the trusted execution environment in this embodiment of this application.

In a possible implementation, verifying the security of the trusted execution environment includes:
determining whether the public key of the trusted execution environment corresponds to the full signature, and when the public key of the trusted execution environment corresponds to the full signature, determining that the trusted execution environment is secure.

For example, verification may include two aspects: Aspect 1 is whether a private key of each object is input into the data processing unit for computing (which may be verified by the data processing unit, where a verification result is sent to the user equipment, without disclosing the private key of each object to the other object and the user equipment). Aspect 2 is whether the public key of the trusted execution environment corresponds to the full signature (which may be verified by the user equipment). When a condition that the private key of each object is input into the data processing unit for computing and the public key of the trusted execution environment corresponds to the full signature are met, the user equipment determines that the computed public key is correct.

In this manner, the security of the trusted execution environment can be verified in a simple manner, to reduce data processing costs, and reduce verification implementation complexity.

Optionally, because the security of the trusted execution environment is verified based on the public key of the trusted execution environment, the user may further choose to verify correctness of the public key of the trusted execution environment.

In a possible implementation, verifying the security of the trusted execution environment includes:
determining whether a synthesis result of the public keys of all the objects is consistent with the public key of the trusted execution environment, and when the synthesis result of the public keys of all the objects is consistent with the public key of the trusted execution environment, determining that the public key of the trusted execution environment is correct; and
determining whether the public key of the trusted execution environment corresponds to the full signature, and when the public key of the trusted execution environment is correct and the public key of the trusted execution environment corresponds to the full signature, determining that the trusted execution environment is secure.

For example, a manner of checking the correctness of the public key of the trusted execution environment may be: determining whether the synthesis result of the public keys of all the objects is consistent with the public key of the trusted execution environment, and when the synthesis result of the public keys of all the objects is consistent with the public key of the trusted execution environment, determining that the public key of the trusted execution environment is correct. For an example implementation of the manner, refer to related descriptions in step S52. Then, whether the public key of the trusted execution environment corresponds to the full signature is determined, and when the public key of the trusted execution environment is correct and the public key of the trusted execution environment corresponds to the full signature, it is determined that the trusted execution environment is secure.

Correctness of the public key of the trusted execution environment is also checked, so that reliability of a verification result of the security of the trusted execution environment can be improved, and a verification manner is more flexible.

Optionally, because the correctness of the public key of the trusted execution environment is verified based on the synthesis result of the public keys of all the objects, the user may further choose to check correctness of the synthesis result of the public keys of all the objects.

In a possible implementation, verifying the security of the trusted execution environment includes:
determining correctness of a public key certificate of each object, and when the public key certificate of each object is correct, determining that a synthesis result of the public keys of all the objects is correct;
determining whether the synthesis result of the public keys of all the objects is consistent with the public key of the trusted execution environment, and when the synthesis result of the public keys of all the objects is correct and the synthesis result of the public keys of all the objects is consistent with the public key of the trusted execution environment, determining that the public key of the trusted execution environment is correct; and
determining whether the public key of the trusted execution environment corresponds to the full signature, and when the public key of the trusted execution environment is correct and the public key of the trusted execution environment corresponds to the full signature, determining that the trusted execution environment is secure.

For example, a manner of checking correctness of the synthesis result of the public keys of all the objects may be: determining correctness of the public key certificate of each object, and when the public key certificate of each object is correct, determining that the public key synthesis result of each object is correct. For an example implementation of the manner, refer to related descriptions in step S51. Then, whether the synthesis result of the public keys of all the objects is consistent with the public key of the trusted execution environment. When the synthesis result of the public keys of all the objects is correct and the synthesis result of the public keys of all the objects is consistent with the public key of the trusted execution environment, it is determined that the public key of the trusted execution environment is correct. For an example implementation of the manner, refer to related descriptions in step S52. Finally, whether the public key of the trusted execution environment corresponds to the full signature is determined, and when the public key of the trusted execution environment is correct and the public key of the trusted execution environment corresponds to the full signature, it is determined that the trusted execution environment is secure.

Both correctness of a synthesis result of the public keys of all the objects and the correctness of the public key of the trusted execution environment are checked, so that the reliability of the verification result of the security of the trusted execution environment is further improved, and the verification manner is more flexible.

After verification of the security of the trusted execution environment is completed and verification succeeds, the user equipment may consider that security existing when the trusted execution environment provides a computing service for the user equipment can be ensured. In this case, the user may input, into the trusted execution environment for computing, data that the user wants to compute. Optionally, before the data of the user is input into the trusted execution environment, the data of the user may be encrypted, to further improve security of data of the user.

The following describes an example method for encrypting the data of the user in this embodiment of this application. FIG. 8 is a schematic diagram of an example method for encrypting data of a user according to an embodiment of this application.

As shown in FIG. 8, in a possible implementation, when it is determined that the trusted execution environment is secure, the method further includes:
The data processing unit sends a communication key of the trusted execution environment based on the private key of each object, to obtain a communication key including the full signature. The communication key including the full signature is used to encrypt data that is input by the user equipment into the trusted execution environment.

In this manner, in an external communication process of the trusted execution environment, a communication key for protecting communication data is obtained through joint signing by the plurality of objects, so that security of data communication can be improved.

For example, as shown in FIG. 8, the trusted execution environment may include a random number generator, configured to randomly generate a communication key (that is, the communication key of the trusted execution environment). The data processing unit may sign the communication key of the trusted execution environment based on the private key of each object, to obtain the communication key including the full signature. An example implementation thereof is similar to a manner in which the data processing unit may sign the operating environment information of the trusted execution environment based on the private key of each object.

For example, in a possible implementation, that the data processing unit signs the communication key of the trusted execution environment based on the private key of each object, to obtain the communication key including the full signature may be: using the communication key of the trusted execution environment as a signature object that needs to be signed, and signing the signature object based on the private key (which is input when the public key of the trusted execution environment is determined) previously input by each object into the data processing unit, to directly obtain and output a communication key including a signature of each object (that is, the communication key including the full signature).

For another example, in another possible implementation, that the data processing unit signs the communication key of the trusted execution environment based on the private key of each object, to obtain the communication key including the full signature includes:
The data processing unit signs the communication key of the trusted execution environment based on the private key of each object, to obtain a communication key that corresponds to each object and that includes the signature share; and
the data processing unit performs synthesis based on the communication key that corresponds to each object and that includes the signature share, to obtain the communication key including the full signature.

For example, that the data processing unit signs the communication key of the trusted execution environment based on the private key of each object, to obtain a communication key including the full signature may alternatively be: using, as a signature object that needs to be signed, the communication key of the trusted execution environment; and signing the signing object based on the private key (which is input when the public key of the trusted execution environment is determined) previously input by each object into the data processing unit, to obtain the communication key that corresponds to each object and that includes a signature share, and then synthesize the communication key that corresponds to each object and that includes the signature share, so as to obtain and output the communication key including the full signature.

In this manner, the communication key including the full signature is generated in a more flexible manner.

A person skilled in the art should understand that, although only two example implementations of obtaining the communication key with the full signature are provided in this embodiment of this application, a manner of obtaining the communication key with the full signature in an actual application does not need to be limited thereto. Any example implementation that can be implemented in the conventional technology to obtain the communication key with the full signature may be applied to this embodiment of this application. This is not limited in this embodiment of this application.

The data processing unit may output the communication key including the full signature to the user equipment, and the user equipment may encrypt, by using the key, data that the user equipment wants to input into the trusted operating environment. Data encrypted based on the communication key including the full signature may be input into the trusted execution environment. After receiving the encrypted data, the object in the trusted execution environment may obtain the communication key including the full signature from the data processing unit, decrypt the received encrypted data based on the communication key including the full signature, and then perform a corresponding operation on the decrypted data.

An embodiment of this application provides a data processing system. For a diagram of a structure of the data processing system, refer to FIG. 4.

In a possible implementation, the system includes a data processing unit and a trusted execution environment, and the trusted execution environment includes two or more objects to be used by user equipment; and
the data processing unit is configured to: receive a security verification request initiated by the user equipment for the trusted execution environment; and send operating environment information including a full signature and a public key of the trusted execution environment to the user equipment in response to the security verification request, where the operating environment information including the full signature is obtained by signing operating environment information of the trusted execution environment based on a private key of each object in the trusted execution environment, and the public key of the trusted execution environment is obtained based on the private key of each object, where the operating environment information including the full signature and the public key of the trusted execution environment are used to verify security of the trusted execution environment.

In a possible implementation, each object is configured to: generate a public key and the private key of the object, and output the private key to the data processing unit; and
the data processing unit is further configured to determine a public key corresponding to a synthesis result of the private keys of all the objects based on the received private key of each object. The determined public key is used as the public key of the trusted execution environment.

In a possible implementation, each object is further configured to: determine operating environment information of the object, and obtain operating environment information of the other object; and determine the operating environment information of the trusted execution environment based on the operating environment information of the object and the operating environment information of the other object; and
the data processing unit is further configured to sign the operating environment information of the trusted execution environment based on the private key of each object, to obtain the operating environment information including the full signature.

In a possible implementation, that the data processing unit signs the operating environment information of the trusted execution environment based on the private key of each object, to obtain the operating environment information including the full signature includes:

The data processing unit signs the operating environment information of the trusted execution environment based on the private key of each object, to obtain operating environment information that corresponds to each object and that includes a signature share; and
the data processing unit performs synthesis based on the operating environment information that corresponds to each object and that includes the signature share, to obtain the operating environment information including the full signature.

In a possible implementation, when it is determined that the trusted execution environment is secure, the data processing unit is further configured to sign a communication key of the trusted execution environment based on the private key of each object, to obtain a communication key including the full signature. The communication key including the full signature is used to encrypt data that is input by the user equipment into the trusted execution environment.

In a possible implementation, that the data processing unit signs a communication key of the trusted execution environment based on the private key of each object, to obtain a communication key including the full signature includes:

The data processing unit signs the communication key of the trusted execution environment based on the private key of each object, to obtain a communication key that corresponds to each object and that includes the signature share; and
the data processing unit performs synthesis based on the communication key that corresponds to each object and that includes the signature share, to obtain the communication key including the full signature.

In a possible implementation, the objects include a chip, and operating environment information of the chip includes at least one of a chip parameter and a code summary of a user-trusted application run by the chip; and
that each object determines operating environment information of the object, and obtains operating environment information of the other object includes:
obtaining, for each chip, operating environment information of the chip based on at least one of a chip parameter of the chip and a code summary of a user-trusted application run by the chip;
sending an information obtaining request to the other object different from the chip, where the information obtaining request is used to obtain the operating environment information of the other object; and
outputting the operating environment information of the chip to the other object different from the chip when receiving an information obtaining request from the other object.

In a possible implementation, the objects include a cloud platform, and operating environment information of the cloud platform includes at least one of software configuration information, virtual machine configuration information, and server configuration information; and
that each object determines operating environment information of the object, and obtains operating environment information of the other object includes:
obtaining, for each cloud platform, operating environment information of the cloud platform based on at least one of software configuration information, virtual machine configuration information, and server configuration information of the cloud platform;
for each of the other object, when the object is deployed on the cloud platform, determining operating environment information of the object based on deployment information of the object; or
when the object is not deployed on the cloud platform, sending an information obtaining request to the object, where the information obtaining request is used to obtain operating environment information of the object; and
outputting the operating environment information of the cloud platform to the other object different from the cloud platform when receiving the information obtaining request from the other object.

In a possible implementation, the user equipment is configured to: determine whether the public key of the trusted execution environment corresponds to the full signature, and when the public key of the trusted execution environment corresponds to the full signature, determine that the trusted execution environment is secure.

In a possible implementation, the user equipment is configured to: determine whether a synthesis result of the public keys of all the objects is consistent with the public key of the trusted execution environment, and when the synthesis result of the public keys of all the objects is consistent with the public key of the trusted execution environment, determine that the public key of the trusted execution environment is correct; and determine whether the public key of the trusted execution environment corresponds to the full signature, and when the public key of the trusted execution environment is correct and the public key of the trusted execution environment corresponds to the full signature, determine that the trusted execution environment is secure.

In a possible implementation, the user equipment is configured to: determine correctness of a public key certificate of each object, and when the public key certificate of each object is correct, determine that a synthesis result of the public keys of all the objects is correct; determine whether the synthesis result of the public keys of all the objects is consistent with the public key of the trusted execution environment, and when the synthesis result of the public keys of all the objects is correct and the synthesis result of the public keys of all the objects is consistent with the public key of the trusted execution environment, determine that the public key of the trusted execution environment is correct; and determine whether the public key of the trusted execution environment corresponds to the full signature, and when the public key of the trusted execution environment is correct and the public key of the trusted execution environment corresponds to the full signature, determine that the trusted execution environment is secure.

In a possible implementation, that each object generates a public key and the private key of the object, and outputs the private key to the data processing unit includes:
generating, for each object, the public key and the private key of the object;
outputting the public key certificate of the object to each of the other object different from the object in the trusted execution environment;
receiving a public key certificate of the other object; and
determining correctness of the public key certificate of the other object, and outputting the private key to the data processing unit when a public key certificate of each of the other object is correct.

An embodiment of this application provides a data processing system, including a processor; and a memory, configured to store instructions that can be executed by the processor. When the processor is configured to execute the instructions, the data processing unit is implemented.

An embodiment of this application provides a nonvolatile computer-readable storage medium. The nonvolatile computer-readable storage medium stores computer program instructions, and when the computer program instructions are executed by a processor, the data processing unit is implemented.

An embodiment of this application provides a computer program product, including computer-readable code or a nonvolatile computer-readable storage medium carrying the computer-readable code. When the computer-readable code runs in a processor of an electronic device, the processor in the electronic device performs the data processing unit.

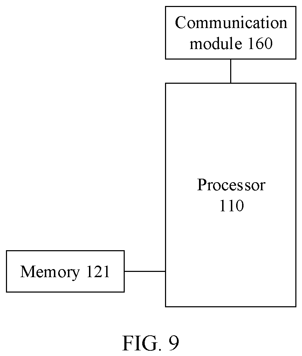

FIG. 9 is a diagram of an example structure of a data processing system according to an embodiment of this application.

As shown in FIG. 9, the data processing system may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, a smart city device, and a server device. A specific type of the data processing system is not specifically limited in this embodiment of this application.

The data processing system may include a processor 110, a memory 121, and a communication module 160. It can be understood that a structure shown in this embodiment of this application does not constitute a specific limitation on the data processing system. In some other embodiments of this application, the data processing system may include more or fewer components than those shown in the figure, or may combine some components, or may split some components, or may have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit NPU), and/or the like. Different processing units may be independent components, or may be integrated into one or more processors.

The processor may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 may be a cache. The memory may store instructions or data that is used by the processor 110 or that is used at a high frequency, for example, a public key of a trusted execution environment in embodiments of this application. If the processor 110 needs to use the instructions or the data, the processor 110 may directly invoke the instructions or the data from the memory. This avoids repeated access, reduces waiting time of the processor 110, and improves system efficiency.

The memory 121 may be configured to store computer-executable program code, and the computer-executable program code includes instructions. The memory 121 may include a program storage area and a data storage area. The program storage area may store an operating system, an application required by at least one function (for example, a secure multi-party computation protocol), and the like. The data storage area may store data (for example, the public key of the trusted execution environment) obtained or created in a use process of a data processing unit, and the like. In addition, the memory 121 may include a high-speed random access memory, and may further include a nonvolatile memory, for example, at least one magnetic disk storage device, a flash storage device, or a universal flash storage (universal flash storage, UFS). The processor 110 runs the instructions stored in the memory 121, and/or instructions stored in memory disposed in the processor, to implement various methods performed by the data processing unit.

The communication module 160 may be configured to: receive data (for example, a security verification request in embodiments of this application) from another apparatus or device in a wireless communication/wired communication manner, and output data to the another apparatus or device. For example, the communication module 160 may provide a wireless communication solution that includes a WLAN (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

A computer-readable storage medium may be a tangible device that may retain and store instructions for use by an instruction execution device. The computer-readable storage medium may be, for example, but is not limited to, an electrical storage device, a magnetic storage device, an optical storage device, an electromagnetic storage device, a semiconductor storage device, or any proper combination thereof. More specific examples (a non-exhaustive list) of the computer-readable storage medium include: a portable computer disk, a hard disk, a random access memory (Random Access Memory, RAM), a read-only memory (Read Only Memory, ROM), an erasable programmable read only memory (Electrically Programmable Read Only Memory, EPROM, or flash memory), a static random access memory (Static Random Access Memory, SRAM), a portable compact disc read-only memory (Compact Disc Read-Only Memory, CD-ROM), a digital versatile disc (Digital Video Disc, DVD), a memory stick, a floppy disk, a mechanical coding device, for example, a punching card or a groove protrusion structure that stores instructions, and any proper combination thereof.

The computer-readable program instructions or code described herein may be downloaded from a computer-readable storage medium to each computing/processing device, or downloaded to an external computer or an external storage device over a network, for example, the Internet, a local area network, a wide area network, and/or a wireless network. The network may include a copper transmission cable, optical fiber transmission, wireless transmission, a router, a firewall, a switch, a gateway computer, and/or an edge server. A network adapter card or a network interface in each computing/processing device receives computer-readable program instructions from a network, and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one or any combination of more programming languages. The programming languages include object-oriented programming languages such as Smalltalk and C++, and a conventional procedural programming language such as "C" or a similar programming language. All computer-readable program instructions may be executed on a user computer, or some may be executed on a user computer as a standalone software package, or some may be executed on a local computer of a user while some is executed on a remote computer, or all the instructions may be executed on a remote computer or a server. When the remote computer is involved, the remote computer may be connected to a user computer over any type of network, including a local area network (Local Area Network, LAN) or a wide area network (Wide Area Network, WAN), or may be connected to an external computer (for example, connected by using an Internet service provider over the Internet). In some embodiments, an electronic circuit, for example, a programmable logic circuit, a field programmable gate array (Field-Programmable Gate Array, FPGA), or a programmable logic array (Programmable Logic Array, PLA), is customized based on status information of computer-readable program instructions. The electronic circuit may execute the computer-readable program instructions, to implement various aspects of this application.

The various aspects of this application are described herein with reference to the flowcharts and/or the block diagrams of the method, the apparatus (system), and the computer program product according to embodiments of this application. It should be understood that each block in the flowcharts and/or the block diagrams and combinations of blocks in the flowcharts and/or the block diagrams may be implemented by computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/actions specified in one or more blocks in the flowcharts and/or the block diagrams. Alternatively, these computer-readable program instructions may be stored in a computer-readable storage medium. These instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowcharts and/or the block diagrams.

Alternatively, these computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implements functions/actions specified in one or more blocks in the flowcharts and/or the block diagrams.

The flowcharts and the block diagrams in the accompanying drawings illustrate system architectures, functions, and operations of possible implementations of apparatuses, systems, methods, and computer program products according to a plurality of embodiments of this application. In this regard, each block in the flowcharts or the block diagrams may represent a module, a program segment, or a part of the instructions, where the module, the program segment, or the part of the instructions includes one or more executable instructions for implementing a specified logical function. In some alternative implementations, the functions marked in the blocks may also occur in a sequence different from that marked in the accompanying drawings. For example, two consecutive blocks may actually be executed substantially in parallel, and sometimes may be executed in a reverse order, depending on a function involved.

It should also be noted that each block in the block diagrams and/or the flowcharts and a combination of blocks in the block diagrams and/or the flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Embodiments of this application are described above. The foregoing descriptions are examples, are not exhaustive, and are not limited to the disclosed embodiments. Many modifications and changes are apparent to a person of ordinary skill in the art without departing from the scope of the illustrated embodiments. The selection of terms used in this specification is intended to best explain the principles of embodiments, practical application, or improvements to technologies in the market, or to enable another person of ordinary skill in the art to understand embodiments disclosed in this specification.

## Claims

1. A security verification method, wherein the method is applied to a data processing system, the data processing system comprises a data processing unit and a trusted execution environment, the trusted execution environment comprises two or more objects to be used by user equipment, and the method comprises:
receiving, by the data processing unit, a security verification request initiated by the user equipment for the trusted execution environment; and
sending, by the data processing unit, operating environment information comprising a full signature and a public key of the trusted execution environment to the user equipment in response to the security verification request, wherein the operating environment information comprising the full signature is obtained by signing operating environment information of the trusted execution environment based on a private key of each object in the trusted execution environment, and the public key of the trusted execution environment is obtained based on the private key of each object, wherein
the operating environment information comprising the full signature and the public key of the trusted execution environment are used to verify security of the trusted execution environment.

2. The method according to claim 1, wherein the method further comprises:
generating, by each object, a public key and the private key of the object, and outputting the private key to the data processing unit;
determining, by the data processing unit, a public key corresponding to a synthesis result of the private keys of all the objects based on the received private key of each object; and
using the determined public key as the public key of the trusted execution environment.

3. The method according to claim 1 or 2, wherein the method further comprises:
determining, by each object, operating environment information of the object, and obtaining operating environment information of the other object;
determining, by each object, the operating environment information of the trusted execution environment based on the operating environment information of the object and the operating environment information of the other object; and
signing, by the data processing unit, the operating environment information of the trusted execution environment based on the private key of each object, to obtain the operating environment information comprising the full signature.

4. The method according to claim 3, wherein the signing, by the data processing unit, the operating environment information of the trusted execution environment based on the private key of each object, to obtain the operating environment information comprising the full signature comprises:
signing, by the data processing unit, the operating environment information of the trusted execution environment based on the private key of each object, to obtain operating environment information that corresponds to each object and that comprises a signature share; and
performing, by the data processing unit, synthesis based on the operating environment information that corresponds to each object and that comprises the signature share, to obtain the operating environment information comprising the full signature.

5. The method according to any one of claims 1 to 4, wherein when it is determined that the trusted execution environment is secure, the method further comprises:
signing, by the data processing unit, a communication key of the trusted execution environment based on the private key of each object, to obtain a communication key comprising the full signature, wherein the communication key comprising the full signature is used to encrypt data that is input by the user equipment into the trusted execution environment.

6. The method according to claim 5, wherein the signing, by the data processing unit, a communication key of the trusted execution environment based on the private key of each object, to obtain a communication key comprising the full signature comprises:
signing, by the data processing unit, the communication key of the trusted execution environment based on the private key of each object, to obtain a communication key that corresponds to each object and that comprises the signature share; and
performing, by the data processing unit, synthesis based on the communication key that corresponds to each object and that comprises the signature share, to obtain the communication key comprising the full signature.

7. The method according to any one of claims 3 to 6, wherein the objects comprise a chip, and operating environment information of the chip comprises at least one of a chip parameter and a code summary of a user-trusted application run by the chip; and
the determining, by each object, operating environment information of the object, and obtaining operating environment information of the other object comprises:
obtaining, for each chip, operating environment information of the chip based on at least one of a chip parameter of the chip and a code summary of a user-trusted application run by the chip;
sending an information obtaining request to the other object different from the chip, wherein the information obtaining request is used to obtain the operating environment information of the other object; and
outputting the operating environment information of the chip to the other object different from chip when receiving an information obtaining request from the other object.

8. The method according to any one of claims 3 to 7, wherein the objects comprise a cloud platform, and operating environment information of the cloud platform comprises at least one of software configuration information, virtual machine configuration information, and server configuration information; and
the determining, by each object, operating environment information of the object, and obtaining operating environment information of the other object comprises:
obtaining, for each cloud platform, operating environment information of the cloud platform based on at least one of software configuration information, virtual machine configuration information, and server configuration information of the cloud platform;
for each of the other object, when the object is deployed on the cloud platform, determining operating environment information of the object based on deployment information of the object; or
when the object is not deployed on the cloud platform, sending an information obtaining request to the object, wherein the information obtaining request is used to obtain operating environment information of the object; and
outputting the operating environment information of the cloud platform to the other object different from the cloud platform when receiving an information obtaining request from the other object.

9. The method according to any one of claims 1 to 8, wherein verifying the security of the trusted execution environment comprises:
determining whether the public key of the trusted execution environment corresponds to the full signature, and when the public key of the trusted execution environment corresponds to the full signature, determining that the trusted execution environment is secure.

10. The method according to any one of claims 1 to 8, wherein verifying the security of the trusted execution environment comprises:
determining whether a synthesis result of the public keys of all the objects is consistent with the public key of the trusted execution environment, and when the synthesis result of the public keys of all the objects is consistent with the public key of the trusted execution environment, determining that the public key of the trusted execution environment is correct; and
determining whether the public key of the trusted execution environment corresponds to the full signature, and when the public key of the trusted execution environment is correct and the public key of the trusted execution environment corresponds to the full signature, determining that the trusted execution environment is secure.

11. The method according to any one of claims 1 to 8, wherein verifying the security of the trusted execution environment comprises:
determining correctness of a public key certificate of each object, and when the public key certificate of each object is correct, determining that a synthesis result of the public keys of all the objects is correct;
determining whether the synthesis result of the public keys of all the objects is consistent with the public key of the trusted execution environment, and when the synthesis result of the public keys of all the objects is correct and the synthesis result of the public keys of all the objects is consistent with the public key of the trusted execution environment, determining that the public key of the trusted execution environment is correct; and
determining whether the public key of the trusted execution environment corresponds to the full signature, and when the public key of the trusted execution environment is correct and the public key of the trusted execution environment corresponds to the full signature, determining that the trusted execution environment is secure.

12. The method according to any one of claims 2 to 11, wherein the generating, by each object, a public key and the private key of the object, and outputting the private key to the data processing unit comprises:
generating, for each object, the public key and the private key of the object;
outputting the public key certificate of the object to each of the other object different from the object in the trusted execution environment;
receiving a public key certificate of the other object; and
determining correctness of the public key certificate of the other object, and outputting the private key to the data processing unit when a public key certificate of each of the other object is correct.

13. A data processing system, wherein the system comprises a data processing unit and a trusted execution environment, and the trusted execution environment comprises two or more objects to be used by user equipment; and
the data processing unit is configured to: receive a security verification request initiated by the user equipment for the trusted execution environment; and send operating environment information comprising a full signature and a public key of the trusted execution environment to the user equipment in response to the security verification request, wherein the operating environment information comprising the full signature is obtained by signing operating environment information of the trusted execution environment based on a private key of each object in the trusted execution environment, and the public key of the trusted execution environment is obtained based on the private key of each object, wherein the operating environment information comprising the full signature and the public key of the trusted execution environment are used to verify security of the trusted execution environment.

14. A data processing system, comprising:
a processor; and
a memory, configured to store instructions that can be executed by the processor, wherein
the processor is configured to implement the data processing unit according to any one of claims 1 to 12 when executing the instructions.

15. A nonvolatile computer-readable storage medium, wherein the nonvolatile computer-readable storage medium stores computer program instructions, and when the computer program instructions are executed by a processor, the data processing unit according to any one of claims 1 to 12 is implemented.

16. A computer program product, comprising computer-readable code or a nonvolatile computer-readable storage medium carrying the computer-readable code, wherein when the computer-readable code runs in an electronic device, a processor of the electronic device executes the data processing unit according to any one of claims 1 to 12.
